(19) Europäisches Patentamt

European Patent Office

Office européen des brevets

(11) **EP 1 675 402 A1**

(12) **EUROPEAN PATENT APPLICATION**

(43) Date of publication:
**28.06.2006 Bulletin 2006/26**

(51) Int Cl.:
*H04N 7/26* (2006.01)     *H04N 7/30* (2006.01)
*H04N 7/50* (2006.01)

(21) Application number: **04300939.8**

(22) Date of filing: **22.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Thomson Licensing**
**92100 Boulogne-Billancourt (FR)**

(72) Inventors:
• **Chen, Ying**
  **100083, Beijing (CN)**

• **Zhai, Jiefu**
  **100083, Beijing (CN)**

(74) Representative: **Hartnack, Wolfgang**
**Deutsche Thomson-Brandt GmbH**
**European Patent Operations**
**Karl-Wiechert-Allee 74**
**30625 Hannover (DE)**

(54) **Optimisation of a quantisation matrix for image and video coding**

(57)     A significant data rate reduction effect in video coding is achieved by quantising the transformed frequency coefficients or components of a pixel block so that thereafter fewer amplitude levels need to be encoded and part of the quantised amplitude values becomes zero and need not be encoded as quantised amplitude values. Many transform based video coding standards use a default quantisation matrix to achieve better subjective video coding/de-coding quality. A quantisation matrix assigns smaller scaling values to some frequency components of the block if the related horizontal and/or vertical frequencies are believed to be the less important frequency components with respect to the resulting subjective picture quality. The proposed quantisation matrix generation starts from default quantisation matrices and derives therefrom a perceptually optimum quantisation matrix for a given picture sequence. In a first pass the candidate quantisation matrix for a given picture sequense is iteratively constructed by simultaneously increasing scaling values for some coefficient positions and decreasing scaling values for other ones of the coefficient positions. In a second pass the generated quantisation matrix is applied for re-encoding the picture sequence.

Fig.3

EP 1 675 402 A1

## Description

The invention relates to a method and to an apparatus for adaptively generating a quantisation matrix that can be used for encoding an image or a picture sequence.

Background

A significant data rate reduction effect in video coding is acchieved by quantising the (transformed) frequency coefficients or components of a pixel block so that thereafter fewer amplitude levels need to be encoded and part of the quantised amplitude values becomes zero and need not be encoded as quantised amplitude values. Many transform based video coding standards use a default quantisation matrix to achieve better subjective video coding/de-coding quality, e.g. ISO/IEC 13818-2 (MPEG-2 Video). A 'quantisation matrix' assigns smaller scaling values (i.e. has greater divisor numbers) to some frequency components of the block if the related horizontal and/or vertical frequencies are believed to be the less important frequency components with respect to the resulting subjective picture quality. It is known that the human psycho-visual system is less sensitive to higher horizontal and/or vertical frequencies, in particular to higher diagonal frequencies.
The MPEG-2, MPEG-4, MPEG-4 AVC/H.264 (ISO/IEC 14496-10) and MPEG-4 AVC/H.264 FRExt ('Fidelity Range Extensions', Redmond JVT meeting, 17-23 July 2004) video coding standards all include support for such quantisation matrices. For example, ISO/IEC 13818-2 discloses in section 6.3.11. a default 'quantisation matrix' for intra blocks having differing quantiser divisor numbers the greatest of which is located at the bottom right position in the 8*8 array of divisor numbers, and a default quantisation matrix for non-intra blocks having equal quantiser divisor numbers for all positions in the 8*8 array. User-defined quantisation matrices can be transmitted by the encoder for application in the decoder, see section 6.2.3.2 in ISO/IEC 13818-2.
H.264 FRExt re-introduces the quantisation matrix for more professional applications. The quantisation matrix is enabled to quantise different DCT coefficients by different scaling values, as other video coding standards such as MPEG-2 and MPEG-4 do. 8*8 transform is added into H.264 FRExt, which however is not in the H.264 Main Profile, aiming to professional applications for high definition TV. Subjective quality is also an important issue for HD video coding. In most cases the quantisation matrix for the different frequencies is set default or fixed throughout the picture sequence.

In the following description it is sometimes referred to the below list of prior art:

[1] G.Wallace, "The JPEG still picture compression standard", Communications of ACM. 34(4),30-44 1991.
[2] T.Wiegand, G.Sullivan, "Draft ITU-T Recommendation and Final Draft International Standard of Joint Video Specification (ITU-T Rec. H.264 | ISO/IEC 14496-10 AVC)", Mar 31, 2003.
[3] K.R.Rao and P.Yip, "Discrete Cosine Transform: Algorithms, Advantages, Applications", Boston, MA: Academic, 1990.
[4] G.Sullivan, T.McMahon, T.Wiegand, A.Luthra, "Draft Test of H.264/AVC Fidelity Range Extensions Amendment", JVT-K047, ftp://ftp.imtc-files.org/jvt-experts/2004_03_Munich/JVT-K047d8.zip.
[5] B.Tao, "On optimal entropy-constrained dead-zone quantisation", IEEE Transactions on Circuits and Systems for Video Technology, Vo1.11, pp.560-563, April 2001.
[6] F.Müller, "Distribution shape of two-dimensional DCT coefficients of natural images", Electronics Letters, 29(22): 1935-1936, October 1993.
[7] S.R.Smoot and L.A.Rowe, "Laplacian Model for AC DCT Terms in Image and Video Coding", Ninth Image and Multidimensional Signal Processing workshop, March 1996.
[8] Watson et al., "DCT quantisation matrices visually optimised for individual images", Human Vision, Visual Processing and Digital Display IV, Proceedings of SPIE 1913-1 (1993).
[9] Yingwei Chen; K.Challapali, "Fast computation of perceptually optimal quantisation matrices for MPEG-2 intra pictures", Image Processing, 1998, ICIP 98 Proceedings 1998 International Conference, 4-7 Oct. 1998.
[10] H.Peterson, A.J.Ahumada, A.B.Watson, "An Improved Detection Model for DCT Coefficient Quantisation", Proceedings of the SPIE, 1993, pp.191-201.
[11] E.Y.Lam, and J.W.Goodman, "A Mathematical Analysis of the DCT Coefficient Distributions for Images", IEEE Trans. on Image Processing, Vol.9, No.10, pp.1661-1666, 2000.
[12] Cristina Gomila, Alexander Kobilansky, "SEI message for film grain encoding", JVT-H022, Mar 31, 2003.
[13] Zhihai He and Sanjit K. Mitra, "A Unified Rate-Distortion Analysis Framework for Transform Coding", IEEE Transactions on Circuits and System for Video Technology, Vol.11, pp.1221-1236, December 2001.

Many current image and video coding standards are based on DCT (discrete cosine transform), such as JPEG [1], MPEG-2, MPEG-4 and AVC/H.264. Under some conditions of the first-order Markov process, for natural images the DCT transform is a robust approximation to the ideal Karhunen-Loeve transform KLT, and its advantage with respect to KLT is that it is image content independent. The DCT is used for de-correlating the image signal and for compacting the signal energy at fewer positions within the e.g. 8*8 coefficient block derived from the corresponding pixel block. The DCT is usually followed by quantisation and entropy coding. As mentioned above, the quantisation process often drops image detail, in order to achieve a high compression ratio. Therefore it is crucial in the quantisation process to keep the most important image information (i.e. coefficients) but to drop the less important coefficients. This can be achieved by adapting the values of the quantiser divisor numbers in the quantisation matrix. If the output bit rate available for coding a picture or a slice is pre-determined or other coding parameters are fixed, the feature of using adaptive quantisation matrices facilitates the flexibility to make choices for the different frequency positions in the block. The aim of selecting a good quantisation matrix is better (measurable) coding/decoding quality, especially better subjective quality, which aim is even more attractive in high-bitrate video coding applications. An 8*8 transform is also reintroduced into H.264 FRExt [4]. A lot of research has been carried out in connection with the 8*8 DCT coefficients used in image and video coding [5][6][7], such as the perception optimal quantisation matrix design and subjective quality assessment [5] [8] [9] .

JPEG splits an image into small 8*8 blocks and utilises DCT for each block. In the transform processing MPEG-2 processes an I-frame like JPEG does it [1]. So, when designing a quantisation matrix for an MPEG-2 I-frame, it is almost the same as in JPEG. In H.264 FRExt, when an 8*8 transform is used for the Y component, the default quantisation matrix for intra-blocks is different from that used in MPEG-2 because only the residual after intra-prediction is encoded, which means that the statistical distribution of these residues is different from that of the DCT coefficients itself. The prediction error may be propagated, and if the quantisation matrix changes the best prediction modes may change correspondingly.

For P-frames and B-frames the encoding of inter blocks is dominating. Without loss of generality, in the following those cases will be referred to as 'inter block', instead of 'P-frame' or 'B-frame'. The same problems may happen for inter blocks, such as the different distribution of DCT error propagation. However, for P-frame encoding the error propagation caused by adaptive quantisation matrices is not so strong but still causes a problem.

Watson et al. [8] have proposed a method for designing a perceptually optimum quantisation matrix for JPEG which provides subjective quality improvement for low and very low bit rates. However for high-bitrate coding these perceptual optimal methods are not optimum. Watson et al. have carried out exhaustive work on designing an image-dependent quantisation matrix based on frequency thresholding [8][10]. In Watson's publications the human sensitivity for different DCT frequency bands is assumed to be different. Based on visual experiments, a so-called 'detection threshold' was measured which represents the minimum distortion that can be perceived by a human. Watson's theory claims that this detection threshold is related to the average luminance of the whole block and to the absolute value of the corresponding frequency components. After the detection thresholds are determined, the perceptual error for each frequency component is defined as quantisation error divided by detection threshold. To pool the errors of all DCT frequency components and all blocks in one picture, Watson has used another vision model called 'β-norm'.

Invention

Although Waston's method works well for JPEG-like intra picture quantisation matrix design, its performance on residual images is not as good as expected, especially for high-bitrate picture encoding.

For performing high-bitrate video compression it is important to preserve more details for picture areas where due to their detailed or complex picture content the available average bit rate is too constrained, which means that for high frequencies not simply a larger scaling during quantisation should be used.

Watson's method could be regarded as a weighted pooling of the quantisation error. When designing a quantisation matrix, known algorithms are based on MSE optimisation as disclosed in [5] and [9], which use the traditional MSE (mean square error) together with some perceptionally optimum weighting for each one of the 8*8 frequency positions. The weights may be block picture content adaptive or block independent. Theoretically, if some weights are added to the distortion values of the frequencies, or even if just a quantisation matrix is used, the distortion-invariance is ruined. Thus, the known methods just try to define an approximate model.

According to the invention, calculating the distortion with the help of other measures can yield a better result for the design or selection of adaptive quantisation matrices. Furthermore, a measure without utilising any form of distortion can also be effective for the design of optimum quantisation matrices. The HVS (human visual system) can also start with a no-distortion model to train good weights for a new measure.

So far no known HVS model considers the film grain problem which is in particular relevant for encoding movies in HD or HDTV quality [12]. In such cases the PSNR (peak signal-to-noise ratio), which is a distortion-based objective quality criterion, is not accurate at all for the assessment of the quality of the signal since pleasant noise is added into the pictures. Coding techniques preserving the film grain should achieve good performance although not using any traditional MSE-based measure or HVS model.

As mentioned above, basically the MSE could be selected as a criterion for determining the distortion of signals and it is widely used because many spaces, such as the Hilbert space, use the $L^2$ norm as a form for measuring energy.

The transforms used in image or video coding so far are orthonormal (i.e. orthogonal and normalised) transforms, for example DCT, Haar wavelet or Hadamard transform. An orthonormal transform is distance-invariant and therefore energy-invariant. So the distortion of a signal which should be accumulated in the spatial domain can also be accumulated in the transformed or frequency domain. Based on this concept, when designing a quantisation matrix, most of the known methods are based on the distortion of each frequency component in the transformed domain with the help of some vision models on human frequency sensitivity.

Therefore, according to the invention, a different method for image/video quality assessment or bit allocation is required that starts from a non-MSE (distortion) based model and that will yield better subjective results, especially for high-bitrate compression.

As already mentioned above, the purpose of applying a quantisation matrix is to assign in the encoding processing smaller scaling values to frequency components that are believed to be the less important and to assign greater scaling values to more important frequency components. Thus, the most important issue is to evaluate the importance of different frequency components. In the prior art, weighted distortion is used as a measure for such evaluation whereby high frequency components will be given big quantisation divisor values and thus a very small bit allocation. However, in JM FRExt reference software the variances of the scalings in default intra 8*8 quantisation matrices are smaller than those of the MPEG-2 and MPEG-4 default quantisation matrices. A main reason is that the intra prediction method turns the normal DCT coefficients into residual DCT coefficients, and for pictures containing abundant details a quantisation matrix having a small variance is better. Therefore in applications for medium or high bit rate, starting from a default quantisation matrix, each frequency component should compete with each other to get more bits assigned. The 'winners' are those achieving high performance on some measures, which might have no distortion form but will care more for the picture content details.

In a process of designing a quantisation matrix the bit constraint condition should also be considered. A lot of prior art proposes that the distribution of the DCT AC coefficients follows a Laplacian distribution [6][7][11]:

$$p(x) = \frac{\lambda}{2} e^{-\lambda|x|} \quad,$$

wherein $p(x)$ is the probability of the random variable x and $\lambda$ is the mean value. For such simple case its standard deviation $\sigma^2$ leads to the following formula for mean $\lambda$:

$$\lambda = \frac{\sqrt{2}}{\sigma} \quad.$$

After the quantisation process with a dead-zone [-$\Delta$, $\Delta$], the percentage $\rho$ of zeros is:

$$\rho = \int_{-\Delta}^{\Delta} \frac{\lambda}{2} e^{-\lambda|x|} dx = 1 - e^{-\lambda\Delta} \quad.$$

In ZhiHai's model [13] the low bound of rate R is:

$$R(\rho) = \log_2\left[\frac{1+(1-\rho)}{1-(1-\rho)}\right] = 2(1-\rho)\log_2 e + O([1-\rho]^3) \quad,$$

wherein p is the percentage of zeros.

Although there is prior art claiming that the distribution is closer to a Gaussian or a Generalised Gaussian one [6], in [13] these cases are considered and the same linear relationship between the bit rate $R$ and the percentage of non-zeros is kept.

A problem to be solved by the invention is to provide or to generate or to adapt improved quantisation matrices that achieve a higher subjective picture quality and preserve more details for picture areas where due to their detailed or complex picture content the available bit rate is too constrained, in particular in high-bitrate video compression. This problem is solved by the method disclosed in claim 1. An apparatus that utilises this method is disclosed in claim 2.

As mentioned above, in H.264 FRExt in most cases the quantisation matrix for the different frequencies is set default or fixed throughout a picture sequence. However, there are cases where some areas in a GOP are full of detail or highfrequency information. To keep these details so as to improve the subjective quality, several methods are disclosed in the invention that generate adaptive quantisation matrices for I frames, P frames and B frames. In H.264 FRExt the quantisation matrices are slice-based and each slice has a picture parameter set ID by which different quantisation matrices can be selected.

According to the invention, a fast two-pass or multi-pass frequency-based processing is used to generate one or more adaptive quantisation matrices for different video sequences, in particular adaptive quantisation matrices for I frames, P frames and B frames. The inventive quantisation matrix generation starts from default intra and inter block quantisation matrices and derives therefrom perceptually optimum quantisation matrices for a given picture sequence. In that first pass the quantisation matrices for a given picture sequence are constructed and in a second pass the generated quantisation matrices are applied for re-encoding that picture sequence and generating a corresponding bit stream. The residual pictures (following the prediction) are re-ordered into different frequency components after DCT transform. A histogram of the quantised coefficients is extracted for the calculation of the measures or metrics. Iteratively sensitive and insensitive frequencies in the DCT domain are selected using several measures, based on prior art distortion-based measures. But this is based on the distribution of the quantised levels of each frequency component. Measures or metrics such as a change of percentage in the dead-zone or the entropy are used for selecting fairly important frequency components so as to increase or decrease the corresponding values of the quantisation matrix. The sum of the entropy for different frequency components can be used as a criterion for measuring the resulting image/video quality.

The adaptive quantisation matrices can be slice-based, i.e. each slice has a picture parameter set ID selecting different quantisation matrices.

In principle, the inventive method is suited for generating a quantisation matrix that can be used for encoding an image or a picture sequence, in which encoding blocks of transformed coefficients related to pixel difference blocks or predicted pixel blocks are quantised or additionally inversely quantised using said quantisation matrix, in which matrix a specific divisor is assigned to each one of the coefficients positions in a coefficient block, said method including the steps:

- loading a pre-determined quantisation matrix that includes one divisor for a transformed DC coefficient and multiple divisors for transformed AC coefficients as a candidate quantisation matrix;
- for a given picture or picture sequence, or for a slice in a given picture or picture sequence, iteratively:

  a) increasing in said candidate quantisation matrix one or more of said AC coefficient divisors, while decreasing in said candidate quantisation matrix one or more other ones of said AC coefficient divisors,

  b) measuring for the changed divisors of the resulting updated candidate quantisation matrix whether or not - when applying the updated candidate quantisation matrix in said encoding - the resulting picture encoding/ decoding quality is improved,
  and if true, allowing for the following iteration loop further increase or decrease, respectively, of said changed divisors,
  and if not true, trying other ones of said divisors for an increase and for a decrease and/or reversing the increase and decrease for said changed divisors;

  c) checking for each one of said changed divisors whether or not it has been increased as well as decreased in the iteration loops and if true, assigning a pre-determined marking value to such divisor, and calculating from said divisor marking values a matrix status value;

- if the number of iterations exceeds a first threshold value or the matrix status value exceeds a second threshold value, outputting the latest candidate quantisation matrix as said quantisation matrix.

In principle the inventive apparatus is suited for generating a quantisation matrix that can be used for encoding an image or a picture sequence, in which encoding blocks of transformed coefficients related to pixel difference blocks or predicted pixel blocks are quantised or additionally inversely quantised using said quantisation matrix, in which matrix a specific divisor is assigned to each one of the coefficients positions in a coefficient block, said apparatus including means being adapted for:

- loading a pre-determined quantisation matrix that includes one divisor for a transformed DC coefficient and multiple divisors for transformed AC coefficients as a candidate quantisation matrix;
- for a given picture or picture sequence, or for a slice in a given picture or picture sequence, iteratively:

a) increasing in said candidate quantisation matrix one or more of said AC coefficient divisors, while decreasing in said candidate quantisation matrix one or more other ones of said AC coefficient divisors,

b) measuring for the changed divisors of the resulting updated candidate quantisation matrix whether or not - when applying the updated candidate quantisation matrix in said encoding - the resulting picture encoding/ decoding quality is improved,

and if true, allowing for the following iteration loop further increase or decrease, respectively, of said changed divisors,

and if not true, trying other ones of said divisors for an increase and for a decrease and/or reversing the increase and decrease for said changed divisors;

c) checking for each one of said changed divisors whether or not it has been increased as well as decreased in the iteration loops and if true, assigning a pre-determined marking value to such divisor, and calculating from said divisor marking values a matrix status value;

- if the number of iterations exceeds a first threshold value or the matrix status value exceeds a second threshold value, outputting the latest candidate quantisation matrix as said quantisation matrix.

Advantageous additional embodiments of the invention are disclosed in the respective dependent claims.

Drawings

Exemplary embodiments of the invention are described with reference to the accompanying drawings, which show in:

Fig. 1    Distributions of the DCT coefficients of intra-frame blocks in the HDTV sequence Kung_fu;
Fig. 2    Distributions of the DCT coefficients of inter-frame blocks in that sequence;

Fig. 3    Flow chart of the quantisation matrix generation process;
Fig. 4    Block diagram of an inventive encoder.

Exemplary embodiments

Several methods for adaptive computation of the quantisation matrices both for intra blocks and for inter blocks are described below. These methods can be used in all DCT-based image or video coding standards, such as JPEG, MPEG-2 and MPEG-4 H.264 FRExt, and provide flexibility for the quantisation process to improve subjective or objective quality or even to adjust the bit rates.
For HD video coding, the 8*8 size transform performs better than the 4*4 size transform. Therefore, if not otherwise stated, in the following discription the 4*4 transform is disabled and the quantisation matrices are all of size 8*8, for intra and for inter blocks.

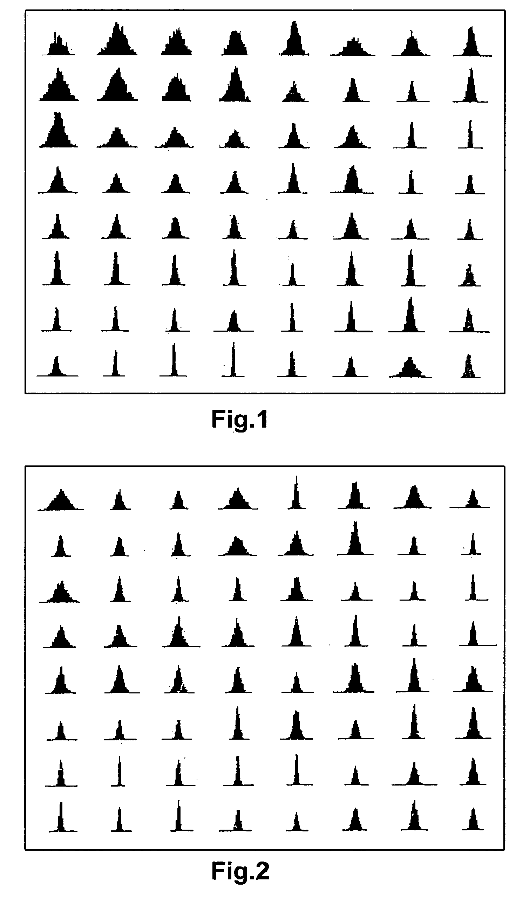

Fig. 1 shows the average distribution of amplitude levels (i.e. the histograms) of the 64 DCT coefficients of all intra-frame 8*8 blocks in the HDTV sequence Kung_fu. Each small image corresponds to a DCT position. The horizontal coordinate is the quantised amplitude value (level), and the vertical coordinate is the number of coefficients in this level after quantisation. The small images are arranged by the raster order, i.e. the upper line of histograms represents purely horizontal 8*8 block frequencies in ascending order from left to right whereas the left column of histograms represents purely vertical frequencies in ascending order from top to bottom.
Fig. 2 shows the corresponding distributions of the DCT coefficients of all inter-frame blocks in that sequence. It is apparent from figures 1 and 2 that most of the frequency components are not compacted or concentrated in the area (i.e. the upper left edge) near the zero frequence (i.e. the DC) but have wider distributions. On one hand only some of the high frequency components compact nearly to zero occurrence. On the other hand there are special cases where high frequency components have a great variance similar to that of some low frequency components. This means that these high frequency components are important and should not get a reduced weighting like in known quantisation matrices. Those frequency components might also be important for the retention of film grain following coding/decoding of the video sequence.
The following assumption is made: if amplitudes for a given frequency coefficient have a higher variance, a small decrease of the corresponding quantisation scaling will not cause a much higher overall quality improvement as compared to the decrease of the quantisation scaling for a frequency component having a smaller variance of its amplitudes. Therefore a higher bit allocation can be given for the latter case.
A further assumption is made that changing several parameters in the quantisation matrix will not influence the intra mode decision process and inter motion compensation and mode decision.

While an MSE distortion measurement is not used, other measurements such as percentage of non-zero amplitudes and/or entropy of each frequency component can be used to decide which scaling values in the quantisation matrix will decrease or increase. Advantageously that means that the coding/decoding image quality can also be evaluated by those measures to some extent.

In the following the term 'quantisation parameter' (denoted QP) is used. QP represents a further divisor in the quantisation process. That divisor has the same value for each frequency component in the 8*8 block. The quantised transform coefficients $\text{coef}_{qij}$ are calculated from the transform coefficients coefij according to the formula

$$\text{coef}_{qij} = \text{coef}_{ij}/\text{QP}/\text{QM}_{ij} \, ,$$

wherein QM is the quantisation matrix and $i$ and $j$ are the horizontal and vertical position indices in the 8*8 block. According to the invention, a small QP of '20' can be used to train the quantisation matrix generation during the first pass since high-bitrate compression is the objective. This QP number can be reduced even more for very-high bit rate compression. According to another embodiment, the possible configuration for the QP during the first pass is to duplicate the final QP in the second pass into the first pass, i.e. to use the destination QP to train the quantisation matrices.

During each adjustment of the quantisation matrix, several scaling values in the quantisation matrix are decreased while several others are increased so as to keep the resulting bit rate approximately constant. The scaling value for the DC component is kept unchangeable.

The quantisation matrix for intra blocks can be generated by considering I frames only. However, the generation of the quantisation matrix for inter blocks is different: the inter blocks of P frames can be used. A block selection process is also useful for inter blocks, according to the motion vector of such blocks.
But once the block data are received and transformed, the adjustment process for the quantisation matrices for intra and inter blocks is the same and only needs to consider the residual.

Without loss of generality, the process for generating quantisation matrix is described in detail for intra blocks only:

Step 0    T = 0; $M\_Status$[8] [8]={0,0,...} ,
              wherein T is a loop counter and $M\_Status$ is a status matrix for the elements of matrix M.
Step 1    $M = M_0$, encode_slice() ,
              wherein $M_0$ is the initial quantisation matrix and $M$ is an update quantisation matrix.
Step 2    $TM$ = M, wherein TM is a candidate or test quantisation matrix.
              For each $0 \leq i, j < 8$ except $(i,j)=(0,0)$
              $TM_{ij} = Shrink(M_{ij})$
              $Metric_{ij} = Function(M, TM_{ij})$
Step 3    Select the N best positions $\{P_k\}$ and the L worst positions $\{P_m\}$ by Metricij for the 63 positions. The 'best' and 'worst' positions will be evaluated by the measures or metrics as described below.
              Update M and $M\_Status$
              Increment T by '1'
Step 4    if(T > threshold1 OR ABS($M\_Status$) > threshold2) go to Step 6, else go to Step 5
Step 5    if (need_re-encode()) $M_0 = M$, go to Step 1,
              else go to Step 2
Step 6    $M_0 = M$, run another encode pass to get the final bitstream.

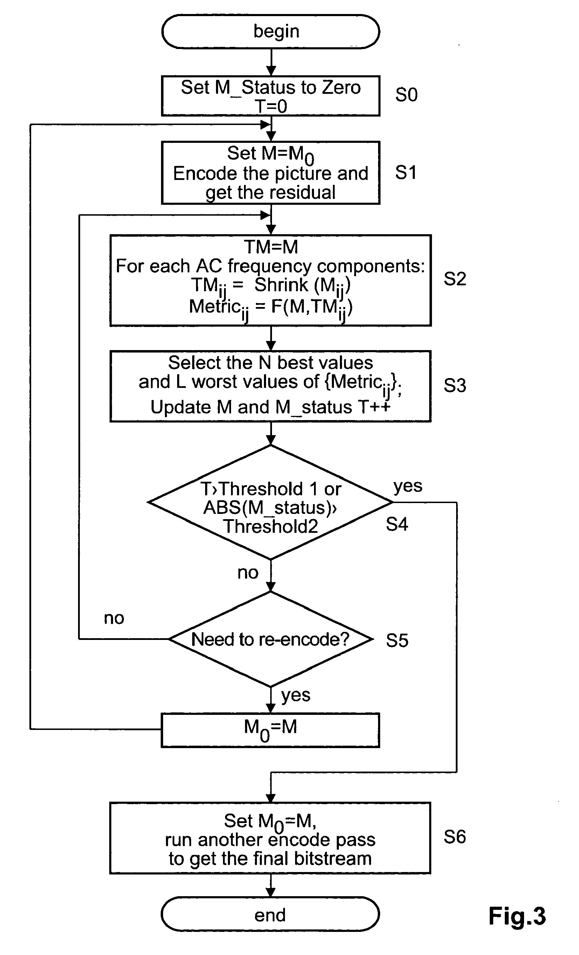

A corresponding flow chart of the quantisation matrix generation process is depicted in Fig. 3, showing steps 0 to 6.
Some remarks concerning the above-listed steps:

a) In step 2, only the residual image needs to be considered.
b) In step 2, the $Shrink()$ function is defined as a multiplication of all the scaling values to be changed in the candidate quantisation matrix M with a factor of e.g. $\beta$=0.88.
c) In step 3, the update quantisation matrix M uses the corresponding values in the candidate or test quantisation matrix TM for the best positions. For the worst positions a multiplication with a corresponding factor of e.g. $1/\beta$ is used.
d) In step 3, for the update of the status matrix $M\_Status$ of matrix M the following strategy can be used: for each frequency component, the number of times the scaling has increased or decreased is calculated. Once both, an increase and a decrease of a factor has happened for the same frequency component the corresponding value in $M\ Status$ will be set to a large number and thereby that frequency component will be forbidden to get further adjustment of scaling.

e) In step 4, ABS(*M_Status*) is the sum of the absolutes of all the values in matrix *M_Status.*

f) In step 6, the re-encode process can be carried out until a last encode process but preferably the quantisation matrix is recorded before.

g) For inter-frames, inter-blocks from several frames can be considered together to get a quantisation matrix for those inter frames. Video analysis can be used to divide the frames into partitions or slices. Since the scaling values in an inter quantisation matrix are generally smaller, preferably the factor β is greater than that used in the intra quantisation matrix. Another way is to set β to '1' and to just add or subtract '1' to increase or decrease a scaling value, respectively. However, experiments have shown that the design of the quantisation matrix for intra blocks is much more important than that for inter blocks.

h) Experiments have shown that the final quantisation matrix M will not change much even if according to step 5 the frame is re-encoded. Therefore the re-encoding step can always be ignored and instead of step 4 continuing with step 5 it can lead to step 2 directly.

The *Function* (denoted F) as used in step 2 is important. F is a measure related to the change that a scaling of the quantisation matrix will cause. In the following, without special mentioning, all parameters and measures are calculated for a single frequency component or coefficient position.

The percentage of the non-zero coefficients for a given frequency component, calculated over all blocks after applying the current test quantisation matrix, will change if the scaling shrinks. F is defined as $F=(\rho_0-\rho_1)/(1-\rho_0)$, wherein $\rho_i$ is the percentage of zeros for one frequency component, subscript '0' corresponds to the old scaling and subscript '1' corresponds to the new scaling. The case where the denominator is zero needs to be specifically handled. The larger F, the more important one frequency component is. So, the best frequency components and worst frequency components can be chosen. A possible selection for the number of the best frequency components to be adjusted once is N=4 and the number of the worst frequency components to be adjusted is L=2. The number of non-zero coefficients or the percentage of the non-zero values is calculated after the quantisation. In other words, what matters here is only the amplitude level for each quantised coefficient. For an intra-frame having a size of *W\*H*, following intra prediction, there is a number of

$No\_block= \dfrac{W}{8}*\dfrac{H}{8}$ blocks. Each block has one DC coefficient and 63 AC coefficients after the 8\*8 transform. For a given quantisation matrix, No_block AC coefficients of the same frequency component $AC_{ij}$ are quantised and the histogram of the amplitude levels of this frequency component is obtained as $His_{ij}$. Therefore p = $His_{ij}(0)$ as a simple statistic variable just cares for the number of level '0' coefficients after quantisation. The number of coefficients that are in the dead-zone (an area in which all the coefficients in it will be quantised to zero) is a very important information of a frequency component and it is quite a difference for a coefficient weather or not it is in the dead-zone. For the Laplacian case,

$$F = (\rho_0 - \rho_1)/(1-\rho_0) = (e^{-\lambda W_0} - e^{-\lambda W1})/(e^{-\lambda W_0}) = 1 - e^{-\lambda(W_1-W_0)} \, ,$$

where $W_0$ and $W_1$ are the minimum values for a coefficient to jump out of the dead-zone before and after one adjustment of scaling. That is (for example): a coefficient denoted by '*a*' will jump out of the dead-zone and therby get a level of '1' or greater only if $a \geq W_i$ .

For a more general distribution, it can be assumed that the probability distribution function $P(x \leq X)$ of one frequency component is in the range [0,+∞], wherein 'x' is a random variable and '*X*' is a positive real numer.

Then, $F= \dfrac{P(x \leq W_0)-P(x \leq W_1)}{1-P(x \leq W_0)} = \dfrac{P(W_1 < x \leq W_0)}{P(W_0 < x)}$ . Here, for simplicity, just the case is discussed where the random variable is distributed in the positive area. Furthermore, if $W_1 = W_0\beta$ is used, $F= \dfrac{P(\beta W_0 < x \leq W_0)}{P(W_0 < x)}$ . So, the measure *F* depends on the start scaling value $W_0$ and the amplitude value distribution of the component. If two frequency components start from the same scaling value, more contracted components will have the chance to reduce the division factor, i.e. to shrink the scaling value.

Based on the HVS model, the default quantisation matrix provides different scaling values for different components. When compared to the default quantisation matrix, the inventive method keeps the rough structure of the default quantisation matrix but adjusts some of the components in order to reduce the amplitude value distribution. Preferably, under some similar conditions the dead-zone is shrinked by giving a higher bit allocation to the more contracted frequency components.

For intra blocks, because of the distribution of the AC coefficient, during the quantisation process most of the coefficients are dropped into the dead-zone, which means that all the information for the AC coefficient's value are lost or greatly eliminated. As mentioned above, the default quantisation matrices of the known coding standards often assign large quantisation divisors to high frequencies based large quantisation divisors to high frequencies based on the assumption that high frequency coefficients might represent noise or might be less sensitive to the human visual system. For inter blocks, the same strategy can be used to get a better quantisation matrix. For some video sequences the result is not obvious for inter blocks so far. But even if there is no change of the inter block quantisation matrix, because of the better intra block quantisation matrix a better subjective quality can be noticed in many following frames.

In this invention several measures for the sensitivity of a frequency component are defined. For example, the metric or measure should represent the proportion between the number of coefficient values jumping out of the dead-zone and the number of coefficient values that are already out the dead-zone.

The following table shows quantisation matrices that can be used for the video sequence kung_fu:

| INTRA8*8_LUMA | INTER8*8_LUMA |
|---|---|
| 7,17,18,18,18,22,19,16, 17,18,23,21,22,22,22,24, 17,19,24,22,19,18,21,29, 18,20,22,22,21,23,15,32, 22,19,24,24,23,25,32,38, 22,11,21,15,14,40,47,47, 18,34,18,34,33,40,47,57, 18,31,32,33,40,48,57,69 | 13,14,15,16,17,17,18,22, 14,15,16,17,17,18,24,20, 15,16,17,17,18,19,21,21, 16,17,17,18,20,18,22,22, 16,14,18,14,21,22,22,23, 17,16,19,20,22,22,23,25, 16,18,20,21,22,23,25,26, 13,21,21,22,23,25,26,27 |

A more general metric or measure is related to the entropy of each frequency component if the histogram of their amplitude levels contains more information than that of the zero-level. For frequency component (i,j) the entropy is

$$H_{ij} = \sum_l - His_{ij}(l) \log_2 His_{ij}(l) \quad .$$

So another measure can be defined as $F_{ij} = \Delta H_{ij}$. This measure is very useful for cases where there are very few non-zero levels in the previous scaling, and after the current shrink of the scaling several coefficients jump out of the dead-zone. And in a case where a frequency component has many non-zero levels, the same change of coefficients will not lead to much increase of the corresponding entropy. Following quantisation, all DCT values are quantised to amplitude levels $l$ = 0, 1, 2 and higher levels. To give a more efficient representation for the entropy of each frequency component, level 1 in the formula for $H_{ij}$ is clipped into signed values: 0, -1, 1, -2, 2, -3, 3, and so on. That is, levels with an absolute value greater than '3' are handled them as '3' or '-3', respectively. This method is based on the experience that most of the coefficients are in the dead-zone and that there are very few high-amplitude value levels.

When considering the improvement of the subjective quality, it must be kept in mind that the bit rates of the video sequence encoded with the default quantisation matrices and of the video sequence encoded with the inventive quantisation matrices are normally not exactly the same. That means that preserving the bit rate is another important issue that influences the assessment of a quantisation matrix. Another measure $F_{ij} = \Delta H_{ij}/\Delta R_{ij}$ can be considered, wherein $\Delta R_{ij}$ is the rate difference caused by usage of the amended candidate quantisation matrix. Most entropy values $E = \sum_{i,j} H_{ij}$ are got with the same bit rate. In other words, the bit allocation policy inclines to the frequency components that have more entropy increase. However this measure is extremely time consuming because the real bit rate can be determined only after the encoding process: to get the 63 $F_{ij}$ values the frame (or even the complete video sequence) needs to be re-encoded at least 63 times. To avoid such lengthy calculations an estimation of $\Delta R$ can be used, such as Zhihai's p-domain based model (see [13]).

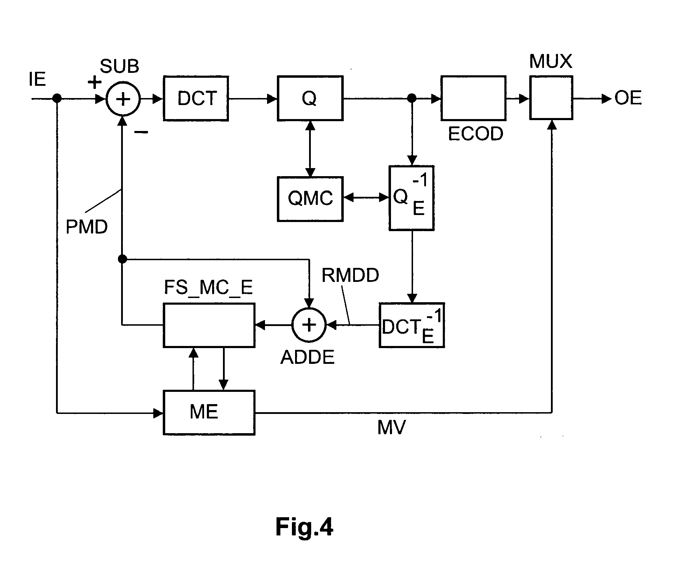

In Fig. 4 the video data input signal IE of the encoder contains e.g. 16*16 macroblock data including luminance and chrominance pixel blocks for encoding. In case of video data to be intraframe or intrafield coded (I mode) they pass a subtractor SUB unmodified. Thereafter the e.g. 8*8 pixel blocks of the 16*16 macroblocks are processed in discrete cosine transform means DCT and in quantising means Q, and are fed via an entropy encoder ECOD to a multiplexer MUX which outputs the encoder video data output signal OE. Entropy encoder ECOD can carry out Huffman coding for the quantised DCT coefficients. In the multiplexer MUX header information and motion vector data MV and possibly encoded audio data are combined with the encoded video data.

In case of video data to be interframe or interfield coded, predicted macroblock data PMD are subtracted on a block basis from the input signal IE in subtractor SUB, and 8*8 block difference data are fed via transform means DCT and quantising means Q to the entropy encoder ECOD. The output signal of quantising means Q is also processed in corresponding inverse quantising means $Q_E^{-1}$, the output signal of which is fed via corresponding inverse discrete cosine transform means $DCT_E^{-1}$ to the combiner ADDE in the form of reconstructed block or macroblock difference data RMDD. The output signal of ADDE is buffer-stored in a picture store in motion compensation means FS_MC_E, which carry out motion compensation for reconstructed macroblock data and output correspondingly predicted macroblock data PMD to the subtracting input of SUB and to the other input of the combiner ADDE. The characteristics of the quantising means Q and the inverse quantising means $Q_E^{-1}$ are controlled e.g. by the occupancy level of an encoder buffer in entropy encoder ECOD. A motion estimator ME receives the input signal IE and provides motion compensation means FS_MC_E with the necessary motion information and provides multiplexer MUX with motion vector data MV for transmission to, and evaluation in, a corresponding decoder. $Q_E^{-1}$, $DCT_E^{-1}$, ADDE and FS_MC_E constitute a simulation of the receiver-end decoder. Quantising means Q and inverse quantising means $Q_E^{-1}$ are connected to a quantisation matrix calculator QMC which operates according to the above-described inventive processing.

The above description relates to luminance blocks. For chrominance components, the quantisation matrices are 4*4, however the same adjustment scheme can be carried out to get improved 4*4 quanisation matrices based on the default quanisation matrices.

In addition, specific quantisation matrices can be generated for different block sizes and/or for field and frame macroblock coding modes.

The numbers given are adapted correspondingly in case other block sizes are used.

The invention has several advantages:

The process of generating the quantisation matrices has a low complexity. It is fast. The quantisation matrices found can be used for high quality and medium or high bit rate applications because the measures used care more for the detailed frequency components. It has the possibility of retention of film grain.

The first advantage is achieved because a frame is encoded only once and the focus lies on the residual picture, and because very simple statistics are used for each frequency component. These statistics need not care for any form of distortion.

The quantisation parameter needs to be adjusted only in the rage of [-1,1] to get close bit rate correspondence with the original bit rate.

**Claims**

1.  Method for generating (QMC) a quantisation matrix (M) that can be used for encoding an image or a picture sequence, in which encoding blocks of transformed (DCT) coefficients related to pixel difference blocks or predicted pixel blocks (PMD) are quantised (Q) or additionally inversely quantised ($Q_E^{-1}$) using said quantisation matrix, in which matrix a specific divisor is assigned to each one of the coefficients positions in a coefficient block, said method being **characterised by** the steps:

    loading a pre-determined quantisation matrix ($M_0$) that includes one divisor for a transformed DC coefficient and multiple divisors for transformed AC coefficients as a candidate quantisation matrix (TM);
    - for a given picture or picture sequence, or for a slice in a given picture or picture sequence, iteratively:

        a) increasing in said candidate quantisation matrix (M) one or more of said AC coefficient divisors, while decreasing in said candidate quantisation matrix (M) one or more other ones of said AC coefficient divisors,
        b) measuring for the changed divisors of the resulting updated candidate quantisation matrix (TM) whether or not
        - when applying the updated candidate quantisation matrix in said encoding - the resulting picture encoding/decoding quality is improved,
        and if true, allowing for the following iteration loop further increase or decrease, respectively, of said changed divisors,
        and if not true, trying other ones of said divisors for an increase and for a decrease and/or reversing the increase and decrease for said changed divisors;
        c) checking for each one of said changed divisors whether or not it has been increased as well as decreased in the iteration loops and if true, assigning a pre-determined marking value to such divisor, and calculating from said divisor marking values a matrix status value (*M_Status*);

- if the number of iterations exceeds a first threshold value or the matrix status value (*M_Status*) exceeds a second threshold value, outputting the latest candidate quantisation matrix as said quantisation matrix (M).

**2.** Apparatus for generating a quantisation matrix (M) that can be used for encoding an image or a picture sequence, in which encoding blocks of transformed (DCT) coefficients related to pixel difference blocks or predicted pixel blocks (PMD) are quantised (Q) or additionally inversely quantised ($Q_E{}^{-1}$) using said quantisation matrix, in which matrix a specific divisor is assigned to each one of the coefficients positions in a coefficient block, said apparatus including means (QMC) being adapted for:

- loading a pre-determined quantisation matrix ($M_0$) that includes one divisor for a transformed DC coefficient and multiple divisors for transformed AC coefficients as a candidate quantisation matrix *(TM)* ;
- for a given picture or picture sequence, or for a slice in a given picture or picture sequence, iteratively:

a) increasing in said candidate quantisation matrix (M) one or more of said AC coefficient divisors, while decreasing in said candidate quantisation matrix (M) one or more other ones of said AC coefficient divisors,
b) measuring for the changed divisors of the resulting updated candidate quantisation matrix *(TM)* whether or not - when applying the updated candidate quantisation matrix in said encoding - the resulting picture encoding/decoding quality is improved,
and if true, allowing for the following iteration loop further increase or decrease, respectively, of said changed divisors,
and if not true, trying other ones of said divisors for an increase and for a decrease and/or reversing the increase and decrease for said changed divisors;
c) checking for each one of said changed divisors whether or not it has been increased as well as decreased in the iteration loops and if true, assigning a pre-determined marking value to such divisor, and calculating from said divisor marking values a matrix status value (*M_Status*) ;

- if the number of iterations exceeds a first threshold value or the matrix status value *(M_Status)* exceeds a second threshold value, outputting the latest candidate quantisation matrix as said quantisation matrix (M).

**3.** Method according to claim 1, or apparatus according to claim 2, wherein a separate quantisation matrix is generated for intra blocks and for inter blocks, and optionally for one or more of: luminance and chrominance blocks, different block sizes, field and frame macroblock coding modes.

**4.** Method according to claim 1 or 3, or apparatus according to claim 2 or 3, wherein said increase and decrease of the divisors is carried out by a fixed factor per iteration loop.

**5.** Method according to one of claims 1, 3 and 4, or apparatus according to one of claims 2 to 4, wherein for each frequency component position in a block a coefficient amplitude distribution statistic is established and the distribution statistics are used for the adjustment of said candidate quantisation matrix in said iteration.

**6.** Method or apparatus according to claim 5, wherein the percentage of quantised non-zero coefficients and/or the entropy for each frequency component position in a block are calculated as distribution statistics.

**7.** Method or apparatus according to claim 6, wherein the entropy is calculated following clipping the amplitude levels of the quantised coefficients into a pre-determined interval.

**8.** Method or apparatus according to claim 6 or 7, wherein the entropy and the output bit rate are both evaluated in said quantisation matrix generation.

**9.** Method or apparatus according to claim 8, wherein the difference between the bit rates resulting from a current candidate quantisation matrix and the previous candidate quantisation matrix is evaluated in said quantisation matrix generation.

**10.** Method or apparatus according to one of claims 6 to 9, wherein the sum of the entropy is used as a criterion for the assessment of said picture coding/decoding quality.

11. Method of encoding an image or a picture sequence using a quantisation matrix that was generated according to the method of one of claims 1 and 3 to 10.

**Fig.1**

**Fig.2**

Fig.3

**Fig.4**

European Patent Office

**EUROPEAN SEARCH REPORT**

Application Number

EP 04 30 0939

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | WATSON A B: "DCT QUANTIZATION MATRICES VISUALLY OPTIMIZED FOR INDIVIDUAL IMAGES" 1 February 1993 (1993-02-01), PROCEEDINGS OF THE SPIE, SPIE, BELLINGHAM, VA, US, PAGES 202-216 , XP008005087 ISSN: 0277-786X * abstract * * section 1. JPEC DCT QUANTIZATION * * section 8. OPTIMIZATION METHOD * * figure 4 * * table 1 * | 11 | H04N7/26 H04N7/30 H04N7/50 |
| A | ----- | 1-10 | |
| A | WATSON A B: "Perceptual optimization of DCT color quantization matrices" PROCEEDINGS OF THE INTERNATIONAL CONFERENCE ON IMAGE PROCESSING (ICIP), vol. 3, 13 November 1994 (1994-11-13), pages 100-104, XP010145934 IEEE, US ISBN: 0-8186-6952-7 * section 3. OPTIMIZATION * * figure 2 * ----- | 1-11 | |
| A | FONG W C ET AL: "Designing JPEG quantization matrix using rate-distortion approach and human visual system model" PROCEEDINGS OF THE INTERNATIONAL CONFERENCE ON COMMUNICATIONS (ICC '97), vol. 3, 8 June 1997 (1997-06-08), pages 1659-1663, XP010227034 IEEE, US ISBN: 0-7803-3925-8 * section 2. The Wu-Gersho's Algorithm * * section 3. The Proposed Algorithm * ----- | 1-11 | |

TECHNICAL FIELDS SEARCHED (Int.Cl.7)

H04N

-/--

The present search report has been drawn up for all claims

| Place of search | Date of completion of the search | Examiner |
|---|---|---|
| Berlin | 8 June 2005 | Sampels, M |

**European Patent Office**

**EUROPEAN SEARCH REPORT**

Application Number

EP 04 30 0939

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WU S-W ET AL: "Rate-constrained picture-adaptive quantization for JPEG baseline coders" PROCEEDINGS OF THE INTERNATIONAL CONFERENCE ON ACOUSTICS, SPEECH, AND SIGNAL PROCESSING (ICASSP), vol. 4, 27 April 1993 (1993-04-27), pages 389-392, XP010110884 IEEE, US ISBN: 0-7803-0946-4 * abstract * * section 2. PROBLEM FORMULATION * * section 3. THE QUANTIZATION TABLE DESIGN ALGORITHM * ----- | 1-11 | |
| D,A | TAO B: "ON OPTIMAL ENTROPY-CONSTRAINED DEADZONE QUANTIZATION" IEEE TRANSACTIONS ON CIRCUITS AND SYSTEMS FOR VIDEO TECHNOLOGY, IEEE INC. NEW YORK, US, vol. 11, no. 4, April 2001 (2001-04), pages 560-563, XP001093575 ISSN: 1051-8215 * the whole document * ----- | 7 | TECHNICAL FIELDS SEARCHED (Int.Cl.7) |

The present search report has been drawn up for all claims

| Place of search | Date of completion of the search | Examiner |
|---|---|---|
| Berlin | 8 June 2005 | Sampels, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)